# EUROPÄISCHE PATENTANMELDUNG

(11) **EP 1 489 059 A2**
(43) Veröffentlichungstag der Anmeldung: **22.12.2004**
(21) Anmeldenummer: 04008303.2
(22) Anmeldetag: 06.04.2004
(51) Int. Cl.: C04B 35/571, C04B 35/634

(54) **Verfahren zur Herstellung eines Keramik-Verbund-Werkstoffes und Keramik-Verbund-Werkstoff**

(30) Priorität: 12.06.2003 DE 10326567
(71) Anmelder: ROBERT BOSCH GMBH, 70442 Stuttgart (DE)
(72) Erfinder: Klonczynski, Alexander, 64859 Eppersthausen (DE); Koehne, Martin, 70806 Kornwestheim (DE)

(57) **Zusammenfassung**

Es wird ein Verfahren zur Herstellung eines Keramik-Verbund-Werkstoffs durch Pyrolyse von mit Füllstoffen versetzten elementorganischen Precursor-Polymeren vorgestellt. Dabei wird den Precursor-Polymeren zusätzlich ein Flussmittel zugesetzt. Die erhaltenen Keramik-Verbund-Werkstoffe weisen eine erhöhte mechanische Festigkeit und/oder einen erhöhten elektrischen Widerstand auf.

## Beschreibung

Die Erfindung betrifft einen verbesserten Keramik-Verbund-Werkstoff und ein Verfahren zu dessen Herstellung nach dem Oberbegriff der unabhängigen Ansprüche.

### Stand der Technik

Bei der Herstellung von keramischen Glühstiftkerzen aus Keramik-Verbundwerkstoffen werden durch die Pyrolyse von elementorganischen Precursoren amorphe SiOC-Keramiken gewonnen. Vorteile dieses Precursor-Thermolyse-Verfahrens gegenüber den konventionellen Herstellungsverfahren für Keramiken (Sintern) sind die wesentlich niedrigeren Prozesstemperaturen und die einfache Verarbeitbarkeit und Formbarkeit von Polysiloxanharzen.

Um mechanisch stabile Keramikkörper aus siliziumorganischen Polymeren herzustellen, genügen bereits Temperaturen von etwa 800°C, während Sinterpulver meist erst bei Sintertemperaturen oberhalb von 1200°C mechanisch stabile Körper ergeben. Die Herstellung keramischer Festkörper aus gefüllten siliziumorganischen Polymeren erfordert also wesentlich niedrigere Temperaturen als das Sintern keramischer Pulver. Ein solches Verfahren ist beispielsweise aus der EP 0 412 428 B 1 bekannt. Dabei wird dem Ausgangspolymeren ein metallischer Füller zugemischt, der mit den bei der Pyrolyse der Polymerverbindungen entstehenden Zersetzungsprodukten reagiert. Bei der Pyrolyse wird bei einer Temperatur im Bereich zwischen 600 bis 1800°C und häufig in einer Inertgasatmosphäre gearbeitet. Als Füllerkomponenten werden u.a. solche aus Chrom, Molybdän, Silizium und intermetallische Verbindungen von Vertretern der vierten bis sechsten Nebengruppe des Periodensystems mit Bor, Silizium oder Aluminium eingesetzt. Diese Füllstoffe sind notwendig, da sonst Schwindungsrisse und übermäßig viele Poren während der Pyrolyse auftreten. Mit Hilfe dieser Füllstoffe ist es möglich, bestimmte Eigenschaften wie z.B. Wärmeausdehnungskoeffizient, Wärmeleitfähigkeit oder den spezifischen elektrischen Widerstand des Komposits genau einzustellen.

Bei der Herstellung eines Keramik-Verbund-Werkstoffes aus einer Precursor-Keramik, wobei als Ausgangsmaterial bspw. ein Polysiloxan, d.h., ein Polymer auf der Basis von Si, C, O und H, verwendet wird, lässt sich demnach durch die Wahl der entsprechenden Füllstoffe das elektrische bzw. physikalische Eigenschaftsprofil des nach der Pyrolyse resultierenden Keramik-Verbund-Werkstoffes exakt auf das jeweilige Anforderungsprofil, bspw. einer keramischen Glühstiftkerze, zuschneiden.

Die Verwendung eines sauerstoffhaltigen Polysiloxan-Precursors als Ausgangsmaterial ermöglicht die einfache Verarbeitbarkeit unter Luft und damit die Herstellung kostengünstiger Produkte. Das Pyrolyseprodukt des gefüllten Polysiloxans besitzt dabei eine gute Festigkeit, hohe chemische Stabilität gegen Oxidation und Korrosion und ist gesundheitlich unbedenklich. Allgemein liegt einer der großen Vorteile des Precursor-Thermolyse-Verfahrens gegenüber dem konventionellen Sintern in der Möglichkeit, dass ein größeres Spektrum an Füllstoffen zur Verfügung steht. Da die Pyrolyse bei wesentlich niedrigeren Temperaturen abläuft, können noch Stoffe verwendet werden, die bei den höheren Sintertemperaturen bereits flüchtig oder flüssig sind. Außerdem können Phasenreaktionen vermieden werden. Die Füllstoffe können auf einfache Art und Weise durch Kneten oder Lösen in die Polysiloxane eingearbeitet werden.

Nachteilig an diesem Verfahren bzw, den dadurch erhaltenen Keramik-Verbund-Werkstoffen sind jedoch die noch zu verbessernde mechanische Festigkeit und der relativ niedrige elektrische Widerstand.

Im Bereich der Glasherstellung auf SiO₂-Basis werden eine Vielzahl an Additiven zur Schmelzpunktserniedrigung des SiO₂ (Schmelzpunkt ca. 1700°C) eingesetzt. Diese sogenannten Flussmittel ermöglichen die Anpassung der Schmelztemperatur und der Schmelzviskosität an die technischen Erfordernisse des Produktionsprozesses.

Vorteile der Erfindung

Die erfindungsgemäßen Keramik-Verbund-Werkstoffe haben gegenüber dem Stand der Technik den Vorteil, dass sie eine erhöhte mechanische Festigkeit aufweisen.

Weiterhin ist vorteilhaft, dass sie einen erhöhten elektrischen Widerstand aufweisen.

Vorteilhafte Weiterbildungen der Erfindung ergeben sich aus den in den Unteransprüchen genannten Maßnahmen.

So ist bspw. vorteilhaft, wenn das den Precursor-Polymeren zugesetzte Flussmittel in elementarer Form vorliegt.

Zusätzliche Vorteile ergeben sich durch die Zugabe des Flussmittels in Form eines anorganischen Oxids.

### Kurze Beschreibung der Zeichnungen

Ausführungsbeispiele der Erfindung sind in den Zeichnungen dargestellt und in der nachfolgenden Beschreibung näher erläutert. Es zeigen
- Fig. 1: den elektrischen Widerstand eines erfindungsgemäßen Keramik-Verbund-Werkstoffes (A) im Vergleich zu einem Referenzwerkstoff (B); und
- Fig. 2: die Bruchfestigkeit eines erfindungsgemäßen Keramik-Verbund-Werkstoffes im Vergleich zu einem Referenzwerkstoff.

### Ausführungsbeispiele

Durch den Einbau einer oder mehrerer der in Tabelle 1 angegebenen Elemente, entweder elementar oder vorzugsweise als Oxid oder als organische Verbindung, bspw. Acetat, Oxalat oder dgl., oder durch als intermetallische Verbindung oder Polymeren (z.B. Polyelektrolyte wie bspw. Natrium-Polyacrylat), die diese Elemente enthalten, lassen sich deutliche Verbesserungen bzgl. der mechanischen Festigkeit und des elektrischen Widerstands erzielen. Vorzugsweise werden diese Elemente im Bereich von ungefähr 0,1 bis ungefähr 60 Vol.-% verwendet.

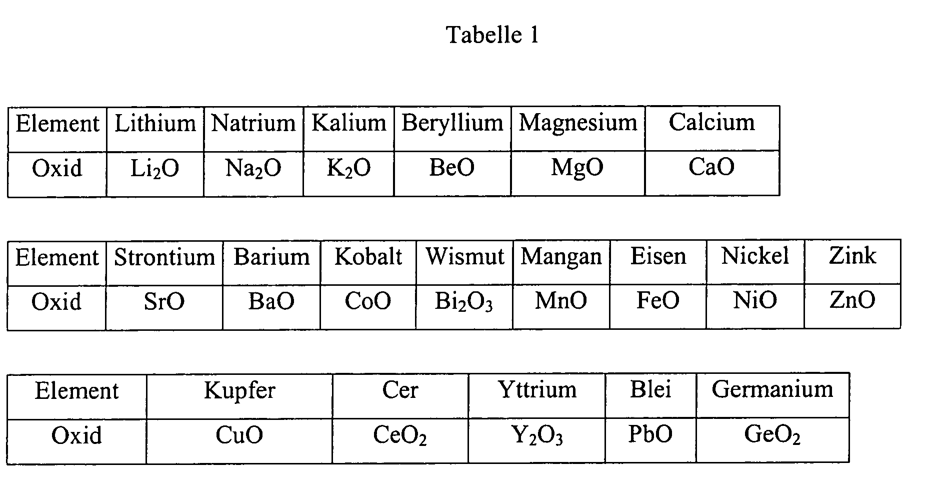

Die in Tabelle 1 aufgezeigten, aus der Silikat-Glasur und der Silikat-Glasherstellung bekannten Flussmittel können entweder als Bestandteil des Precursor-Polymers (z.B. Reaktion des Acetats des Flussmittels mit dem Precursor-Polymer) und/oder als Additiv, das nicht mit dem Polymer reagiert, in elementarer oder seiner organischen Form (bspw. als Oxalat, Acetat, etc.) bzw. anorganischen Verbindungen zugesetzt werden, wobei die Oxidform bevorzugt ist. Es können auch Kombinationen dieser Flussmittel verwendet werden.

Im folgenden werden Beispiele für erfindungsgemäße Keramik-Verbund-Werkstoffe gegeben, wobei neben Polysiloxanen auch Polysilsesquioxane, Polysilane, Polysilazane und Polycarbosilane eingesetzt werden können. Es ist anzumerken, dass die Erfindung nicht auf diese Beispiele beschränkt ist.

Es wurden isolierende Keramik-Verbund-Werkstoffe unter Zusatz verschiedener Flussmittel hergestellt. Die Pyrolyse wurde unter Standardbedingungen durchgeführt, um den Vergleich mit dem Eigenschaftsprofil herkömmlicher Massen ohne Zusatz von Flussmittel sicher zu stellen. Unter Standardbedingungen ist zu verstehen, dass die Pyrolyse in einer Argonatmosphäre mit folgenden Heizparametern durchgeführt wurde: Aufheizen von 20°C bis 300°C während einer Dauer von 1 Stunde; Aufheizen von 300°C bis 1300°C während einer Dauer von in 51 Stunden; Halten bei 1300°C für eine Dauer von 2 Stunden; und Abkühlen von 1300°C auf 20°C während einer Dauer von 4 Stunden.

### Beispiel 1 (wismuthaltige Masse):

Die Aufbereitung erfolgte über einen Mischprozess mit anschließendem Kneten. Danach wurde die Masse gemahlen und gesiebt. Die Zusammensetzung war wie folgt:
50-80 Vol.-% Polysiloxan (enthält 0-3 Masse-% Zirkonacetylacetonat)
0-10 Vol-% SiC
0-20 Vol-% Al₂O₃
0-20 Vol-% MoSi₂
0,01-20 Vol.-% Bi₂O₃

Eine beispielhafte Zusammensetzung kann wie folgt aussehen: 80 Vol.-% Polysiloxan; 10 Vol.-% SiC; 7 Vol.-% Al₂O₃; 3 Vol.-% Bi₂O₃ (zusammen 100 Vol.-%).

Wie bereits weiter oben angedeutet, wurde ein Pyrolyseprogramm bei 1300°C und einem Argondurchfluss von 3 l/h gefahren. Bei dem verwendeten Ofen handelte es sich um einen Aluminium-Rohrofen.

### Beispiel 2 - cerhaltige Masse

Die Aufbereitung erfolgte über einen Mischprozess mit anschließendem Kneten. Danach wurde die Masse gemahlen und gesiebt. Die Zusammensetzung war wie folgt:
50-80 Vol.-% Polysiloxan (enthält 0-3 Masse-% Zirkonacetylacetonat)
0-10 Vol-% SiC
0-20 Vol-% Al₂O₃
0-20 Vol-% MoSi₂
0,01-20 Vol.-% CeO₂

Eine beispielhafte Zusammensetzung kann wie folgt aussehen: 50-80 Vol-% Polysesquioxan (enthält 0-3 Masse-% Zirkonacetylacetat); 0-10 Vol.-% SiC; 0-20 Vol.-% Al₂O₃; 0-20 Vol.-% MoSi₂; 0,01-20 Vol.-% BaO; und 0,01-20 Vol.-% SrO.

Wie bereits weiter oben angedeutet, wurde ein Pyrolyseprogramm bei 1300°C und einem Argondurchfluss von 3 1/h gefahren. Bei dem verwendeten Ofen handelte es sich um einen Aluminium-Rohrofen.

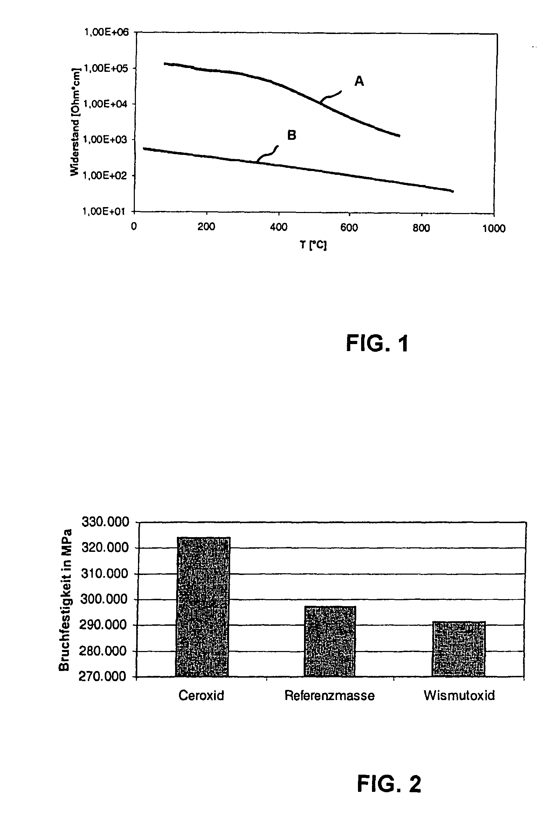

Durch die Verwendung von Flussmitteln kann eine deutliche Anhebung des elektrischen Widerstands (z.B. Wismutoxid, vgl. Fig. 1, Kurve A) über den gesamten Temperaturbereich erreicht werden. Außerdem kann die Bruchfestigkeit (z.B. Ceroxid, vgl. Fig. 2) deutlich erhöht werden.

## Patentansprüche

1. Verfahren zur Herstellung eines Keramik-Verbund-Werkstoffs durch Pyrolyse von mit Füllstoffen versetzten elementorganischen Precursor-Polymeren, **dadurch gekennzeichnet, dass** den Precursor-Polymeren zusätzlich ein Flussmittel zugesetzt wird.

2. Verfahren nach Anspruch 1, **dadurch gekennzeichnet, dass** das elementorganische Precursor-Polymer ausgewählt ist aus der Gruppe bestehend aus Polysiloxan, Polysilsesquioxan, Polysilan, Polysilazan und Polycarbosilan.

3. Verfahren nach Anspruch 1 oder 2, **dadurch gekennzeichnet, dass** das Flussmittel ausgewählt ist aus der Gruppe bestehend aus Li, Na, K, Be, Mg, Ca, Sr, Ba, Co, Bi, Mn, Fe, Ni, Zn, Cu, Ce, Y, Pb, Ge und organischen oder anorganischen Verbindungen dieser Elemente oder Mischungen davon.

4. Verfahren nach Anspruch 3, **dadurch gekennzeichnet, dass** die organischen Verbindungen ausgewählt sind aus der Gruppe bestehend aus Oxalaten, Acetaten, Acetylacetonaten, Alkoxiden, Citraten und dgl.

5. Verfahren nach Anspruch 3, **dadurch gekennzeichnet, dass** die anorganischen Verbindungen Oxide sind.

6. Verfahren nach Anspruch 5, **dadurch gekennzeichnet, dass** die Oxide ausgewählt sind aus der Gruppe bestehend aus BeO, MgO, SrO, Bi₂O₃, ZnO, CeO₂, Y₂O₃ und GeO₂.

7. Verfahren nach Anspruch 3, **dadurch gekennzeichnet, dass** die Flussmittel dem Precursor-Polymer elementar als Additiv zugesetzt werden.

8. Verfahren nach Anspruch 5 oder 6, **dadurch gekennzeichnet, dass** die Flussmittel als Additive in Form ihrer Oxide zugesetzt werden.

9. Verfahren nach einem der vorstehenden Ansprüche, **dadurch gekennzeichnet, dass** das Flussmittel Bestandten des Precursor-Polymers ist.

10. Keramik-Verbund-Werkstoff, erhalten aus einem mit Füllstoffen versetzten elementorganischen Precursor-Polymeren, **dadurch gekennzeichnet, dass** er zusätzlich ein Flussmittel aufweist.
